# EUROPÄISCHE PATENTSCHRIFT

(11) **EP 2 162 643 B1**
(45) Veröffentlichungstag und Bekanntmachung des Hinweises auf die Patenterteilung: **07.03.2012**
(21) Anmeldenummer: 09761403.6
(22) Anmeldetag: 29.05.2009
(51) Int. Cl.: F16H 47/08, F16H 61/21

(54) **AUTOMATGETRIEBE MIT EINEM ANTRIEBSBEREICH, EINEM HYDRODYNAMISCHEN WANDLER, UND EINEM ABTRIEBSBEREICH SOWIE VERFAHREN ZUM BREMSEN BEI HOHEN DREHZAHLEN**
AUTOMATED TRANSMISSION WITH A DRIVE REGION, A HYDRODYNAMIC CONVERTER AND A DRIVEN REGION, AND METHOD FOR BRAKING AT HIGH SPEEDS
BOÎTE AUTOMATIQUE AVEC UNE PARTIE D'ENTRÉE, UN CONVERTISSEUR HYDRODYNAMIQUE ET UNE PARTIE DE SORTIE, AINSI QUE PROCÉDÉ DE FREINAGE AUX HAUTES VITESSES DE ROTATION

(30) Priorität: 12.06.2008 DE 102008027946
(43) Veröffentlichungstag der Anmeldung: 17.03.2010
(73) Patentinhaber: Voith Patent GmbH, 89522 Heidenheim (DE)
(72) Erfinder: BUSCH, Jörg, 89551 Königsbronn-Zang (DE)
(74) Vertreter: Weitzel, Wolfgang
(86) Internationale Anmeldenummer: PCT/EP2009/003856
(87) Internationale Veröffentlichungsnummer: WO 2009/149840

(56) Entgegenhaltungen:
- DE-B- 1 032 109
- FR-A- 1 325 887
- US-A- 2 402 164
- US-A- 5 030 178

## Beschreibung

Die Erfindung betrifft ein Automatgetriebe mit Kraftwegen sowohl über den hydrodynamischen Wandler, reine mechanischen Kraftwegen um den hydrodynamischen Wandler herum als auch kombinierten Kraftwegen. Außerdem betrifft die Erfindung ein Verfahren zum Bremsen bei niedrigen Drehzahlen mit einem solchen Automatgetriebe.

Gattungsgemäße Automatgetriebe sind allgemein bekannt. Beispielhaft soll hier auf die DE 20 21 543 A1 verwiesen werden, welche ein kombiniert hydrodynamisch - mechanisches Getriebe für Fahrzeuge mit Teilung der Traktionsleistung mittels eines Differentialgetriebes auf einen Kraftweg mit einem hydrodynamischen Wandler und einen parallel dazu liegenden mechanischen Kraftweg und mit einer Zusammenführung der Traktionsleistung auf einen gemeinsamen Kraftweg beschreibt. Dabei weist das Getriebe mechanische, wahlweise ein- und ausschaltbaren Übersetzungsstufen (Gänge) im hydrodynamischen und/oder mechanischen und/oder im gemeinsamen Kraftweg auf.

Diese so genannten Differentialwandlergetriebe (DIWA) werden im Antrieb von Fahrzeugen verschiedener Art angewandt. Dabei werden im DIWA - Getriebe, wie üblicherweise in allen Automatgetrieben, mehrere Planetensätze verwendet. Diese Planetensätze werden in einem vorbestimmten festen Koppelschema miteinander verbunden. Mit Lamellenkupplungen beziehungsweise Lamellenbremsen werden dann die verschiedenen Übersetzungen des Getriebes realisiert. Mit den Lamellen der Kupplungen beziehungsweise Bremsen wird typischerweise erreicht, dass es zu Schaltungen ohne Zugkraftunterbrechung kommt.

Den bekannten vielfältigen Vorteilen der DIWA - Getriebe stehen als Nachteil der hohe Bauteilaufwand an Planetensätzen und Lamellenkupplungen beziehungsweise Lamellenbremsen gegenüber.

Aus der deutschen Auslegeschrift DE-B-1064 824 ist außerdem ein Automatgetriebe mit einem Differenzialwandler bekannt, bei welchem der in Richtung des Kraftflusses nach dem hydrodynamischen Wandler angeordnete Abtriebsbereich lediglich einen Planetensatz aufweist. Dieser erlaubt ebenfalls einen sehr kompakten Aufbau des Automatgetriebes.

Die FR 1325887 zeigt die Merkmale des Oberbegriffes des Anspruchs 1.

Es ist die Aufgabe der hier vorliegenden Erfindung, ein Automatgetriebe dahingehend zu verbessern, dass eine Optimierung hinsichtlich des erforderlichen Bauraumes und eine Optimierung hinsichtlich der möglichen Funktionalitäten erzielt wird.

Erfindungsgemäß wird diese Aufgabe durch die im kennzeichnenden Teil von Anspruch 1 genannten Merkmale gelöst.

Der erfindungsgemäße Aufbau mit nur einem Planetensatz im Abtriebsbereich des Automatgetriebes ermöglicht es, diesen Abtriebsbereich deutlich kompakter auszugestalten, als dies bei derartigen Automatgetrieben mit Differentialwandler bisher üblich war, welche im Abtriebsbereich jeweils wenigstens zwei Planetensätze aufweisen.

Erfindungsgemäß ist außerdem ein Bremsmittel vorgesehen, welches zum Festhalten der Turbine des hydrodynamischen Wandlers geeignet ist. Wird der Abtrieb mit dem Hohlrad verbunden, so kann durch Festhalten der Turbine des hydrodynamischen Wandlers ein zusätzlicher Vorwärtsgang mit hoher Übersetzung ins Schnelle, ein so genannter "Overdrive" erreicht werden. Mit einer derartigen Ausgestaltung der Erfindung kann somit bei sehr kompaktem Aufbau des Abtriebsbereiches mit nur einem Planetensatz und einer zusätzlichen Turbinenbremse ein Aufbau erreicht werden, welcher zusätzlich zu seiner kompakten Ausgestaltung einen zusätzlichen Gang "ins Schnelle" erlaubt.

Den besonders kompakten und einfachen Aufbau des Automatgetriebes im Abtriebsbereich erreicht man durch den Verzicht auf die Möglichkeit, nur über den Wandler des Differentialwandlergetriebes eine verschleißfreie Bremse zu realisieren.

In einer entsprechenden vorteilhaften Ausgestaltung der Erfindung kann jedoch eine vom Wandler separate verschleißfreie Dauerbremse vorgesehen werden. Eine derartige Bremse, welche entweder als Primär- oder Sekundär-Retarder ausgebildet sein kann, erlaubt es, in paralleler Anordnung zu dem Getriebe den insgesamt benötigten Bauraum von Getriebe und Dauerbremse kleiner zu halten, als dies bei dem Aufbau gemäß dem Stand der Technik mit zwei Planetensätzen im Abtriebsbereich des Automatgetriebes der Fall wäre.

In einer weiteren besonders günstigen Ausgestaltung der Erfindung kann es dabei vorgesehen sein, dass das Sonnenrad des Planetensatzes mit dem Wandler verbunden ist, wobei Bremsmittel zum Festhalten des Hohlrades vorgesehen sind, und wobei Kupplungsmittel zum Verbinden des Hohlrades einerseits oder des Steges andererseits mit dem Abtrieb vorgesehen sind.

Diese Anordnung erlaubt es über die Kupplungs- beziehungsweise Bremsmittel eine Verbindung des Abtriebes über den Wandler einerseits und direkt über den Steg andererseits mit dem Antriebsbereich des Automatgetriebes herzustellen. Bei gegenüber dem Gehäuse des Getriebes gebremstem Hohlrad wird so erreicht, dass die aus dem Antriebsbereich des Automatgetriebes kommende Kraft über den hydrodynamischen Wandler einerseits und eine mechanische Übertragung andererseits vom Eingang des Getriebes zu dessen Ausgang gelangt. Dieser Aufbau entspricht dabei typischerweise dem ersten Gang und erlaubt so ein Anfahren unter Einsatz des hydrodynamischen Wandlers. Für die weiteren Gänge wird nun das Bremsmittel gelöst, so dass unter Umgehung des Wandlers die Kraft übertragen wird. Zur weiteren Einstellung der Übersetzungen (Gänge) wird dann in bekannter und üblicher Art eine Veränderung der Kopplungsstruktur der Elemente des Antriebsbereiches vorgesehen.

In einer weiteren Ausgestaltung hiervon, ist ein weiteres Kupplungsmittel und/oder Bremsmittel vorgesehen, welches zum Festhalten des Steges gegenüber dem Gehäuse des Getriebes ausgebildet ist.

Wird dieses Kupplungsmittel betätigt und gleichzeitig mit dem anderen Kupplungsmittel der Abtrieb mit dem Hohlrad des einen Planetensatzes im Abtriebsbereich verbunden, so wird eine Kraftübertragung mit Drehrichtungsumkehr nach dem hydrodynamischen Wandler erfolgen. Somit verfügt das Getriebe über einen einfach zu schaltenden Rückwärtsgang.

Gemäß einer sehr vorteilhaften Weiterbildung der Erfindung sind die Kupplungsmittel als Klauenkupplungen ausgebildet. Derartige Klauenkupplungen weisen gegenüber den bei Automatgetrieben üblichen Lamellenkupplungen deutliche Vorteile hinsichtlich des Bauraumes der Herstellungskosten auf. Da sie ohne Lamellen auskommen, welche während des Betriebes aneinander reiben, ermöglichen sie ferner eine Verbesserung des Wirkungsgrades eines derartigen Automatgetriebes. Da eine Veränderung der Kopplungsstruktur wie eingangs erläutert primär beim Schalten in den Rückwärtsgang notwendig ist, stellt das lastlose Schalten, welches typischerweise der Nachteil von Klauenkupplungen ist, hier keinen Nachteil dar.

In einer besonders günstigen Weiterbildung dieser Idee, können zumindest für einen Teil der Klauenkupplungen Synchronisierungsmittel vorgesehen sein.

Diese Synchronisierungsmittel sind insbesondere dann von entscheidendem Vorteil, wenn es um das Schalten in den oben bereits erwähnten zusätzlichen Gang ("Overdrive") geht. Da hier jedoch typischerweise vom Schwung des Fahrzeuges beim Schalten in einen derart schnellen Gang eine ausreichende Bewegungsenergie vorhanden ist, stellt auch hier das lastlose Schalten keinen nennenswerten Nachteil dar. Durch die Synchronisierung, welche entweder in einem geeigneten Bereich des Getriebes oder im Bereich der Kupplungselemente direkt vorgesehen ist, kann dieser lastlose Schaltvorgang dann synchronisiert und somit sehr schnell ablaufen.

Ferner gibt die Erfindung ein Verfahren zum Bremsen mit einem Automatgetriebe gemäß der Erfindung an.

Dazu wird im zweiten, dritten oder vierten Gang ohne Veränderung der Kopplungsstruktur des Planetensatzes im Abtriebsbereich lediglich das Hohlrad des Planetensatzes über geeignete Bremsmittel, insbesondere Lamellenbremsen, festgehalten. Dadurch kommt es zu einer Momenteneinleitung in dem Bereich der Turbine des hydrodynamischen Wandlers, welcher eine Bremswirkung analog einem Retarder hervorruft.

Zum Verstärken des Bremsens bei entsprechend niedrigen Geschwindigkeiten, wie sie beispielsweise im ersten oder zweiten Gang auftreten, oder im "Overdrive", kann ein separater Retarder beziehungsweise eine separate verschleißfreie Dauerbremse vorgesehen werden, wie dies oben bereits erwähnt wurde.

Weitere vorteilhafte Ausgestaltungen der Erfindung ergeben sich aus den restlichen Unteransprüchen und werden anhand des Ausführungsbeispiels deutlich, welches nachfolgend exemplarisch anhand der Zeichnungen erläutert wird.

Dabei zeigen:
- Figur 1: eine schematische Darstellung eines Differentialwandlergetriebes nach dem Stand der Technik;
- Figur 2: ein Differentialwandlergetriebe gemäß der Erfindung in einer ersten Ausführungsform;
- Figur 3: den Kraftfluss bei dem erfindungsgemäßen Getriebe im ersten Gang;
- Figur 4: den Kraftfluss beim erfindungsgemäßen Getriebe im vierten Gang;
- Figur 5: den Kraftfluss beim erfindungsgemäßen Getriebe im Rückwärtsgang;
- Figur 6: den Kraftfluss im Overdrive bei einem Getriebe in eine alternativen Ausführungsform;
- Figur 7: das erfindungsgemäße Getriebe in einer weiteren alternativen Ausführungsform; und
- Figur 8: das erfindungsgemäße Getriebe in der alternativen Ausführungsform mit zusätzlichen optimiertem Eingangsbereich.

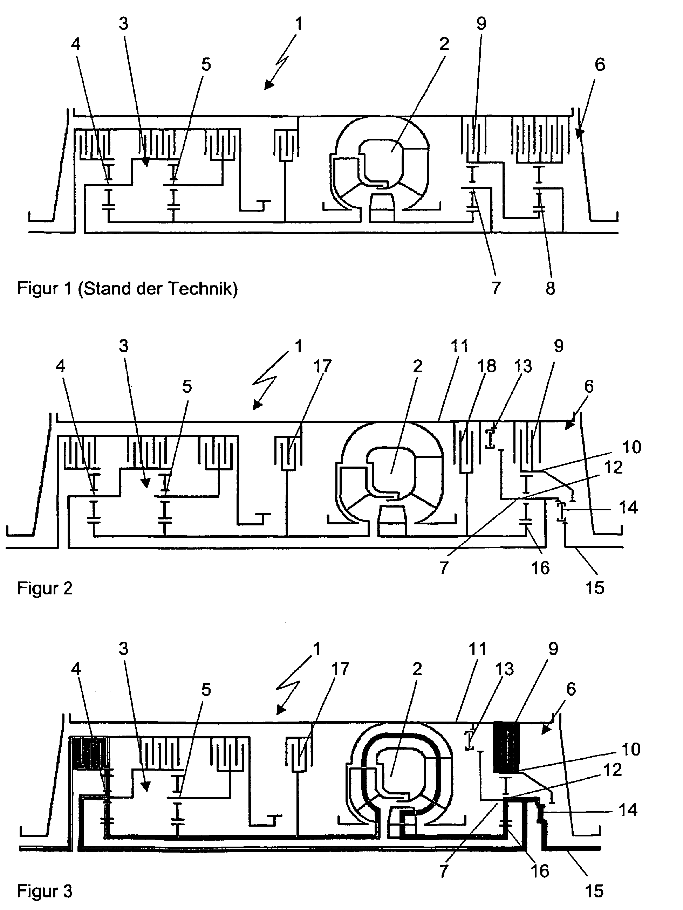

In Figur 1 ist ein Differentialwandlergetriebe 1 als typisches Beispiel für ein gattungsgemäßes Automatgetriebe nach dem Stand der Technik dargestellt. Dabei ist mittig ein hydrodynamischer Wandler 2 zu erkennen. In der Darstellung gemäß Figur 1 links neben dem hydrodynamischen Wandler ist der Antriebsbereich 3 zu erkennen, welcher im hier dargestellten Fall über die üblicherweise vorhandenen Planetensätze 4 und 5 verfügt. In Figur 1 rechts des hydrodynamischen Wandlers 2 ist der Abtriebsbereich 6 zu erkennen, welcher gemäß dem Stand der Technik ebenfalls über zwei Planetensätze 7, 8 verfügt. Der Aufbau gemäß Figur 1 ist der heute übliche Aufbau eines Differentialwandlergetriebes, bei dem der Wandler für den ersten Vorwärtsgang, den Rückwärtsgang und als verschleißfreie Dauerbremse beziehungsweise Retarder Verwendung findet. Nachteilig bei einem derartigen Getriebe ist es jedoch, dass beim Bremsen, insbesondere beim Bremsen mit hohen Drehzahlen eine hohe Belastung des Wandlers 2 auftritt, welche wiederum zu einer hohen Geräuschabstrahlung des Getriebes führt. Außerdem kann der Wandler 2 nicht für das Bremsen oder das Anfahren entsprechend optimiert werden, weil dieser beide Aufgaben erfüllen muss.

Abhilfe schafft da das neuartige Getriebe in der Darstellung gemäß Figur 2. Auch hierbei handelt es sich um ein Differentialwandlergetriebe 1, welches den charakteristischen Wandler 2 aufweist. Auch hier findet sich in der Darstellung gemäß Figur 2 links des Wandlers 2 der Antriebsbereich 3, welcher analog gemäß dem Stand der Technik aufgebaut sein kann. Der Antriebsbereich 3 spielt für die hier vorliegende Erfindung keine weitere Rolle, so dass auf den Antriebsbereich hier nicht mehr eingegangen wird.

Auf der rechten Seite des Wandlers 2 in Figur 2 findet sich wie beim Stand der Technik der Abtriebsbereich des neuartigen Getriebes 1. Dieser Abtriebsbereich 6 weist nun nur noch einen Planetensatz 7 auf, wogegen der aus dem Stand der Technik bekannte zweite Planetensatz 8 vollkommen entfallen kann. Analog zum Stand der Technik weist der Abtriebsbereich 6 außerdem eine Lamellenbremse 9 auf, mit welcher das Hohlrad 10 des Planetensatzes 7 bei Bedarf gegenüber einem Gehäuse 11 des Getriebes 1 gebremst werden kann. Der Steg 12 des Planetensatzes 7 ist über eine Kupplung 13 mit dem Gehäuse 11 des Getriebes 1 verbindbar. Der Abtrieb 15 des Getriebes 1 ist mittels der Kupplung 14 mit dem Hohlrad 10 oder dem Steg 12 verbindbar. Das Sonnenrad 16 des Planetensatzes 7 weist dagegen eine feste Verbindung mit der Turbine des Wandlers 2 auf.

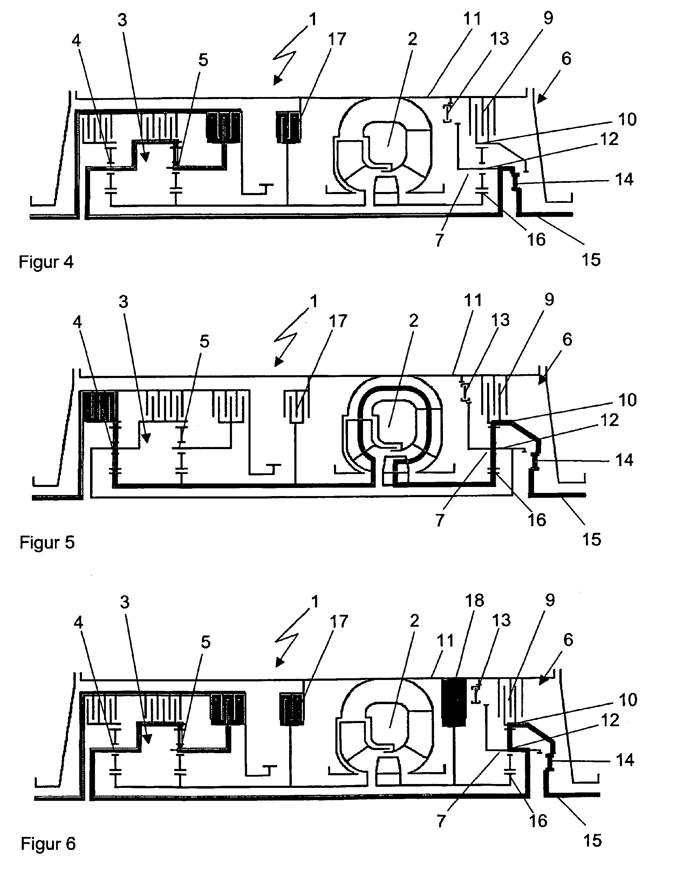

Zusätzlich weist der Abtriebsbereich 6 noch eine weitere Lamellenbremse 18 auf. Unter Verwendung dieser weiteren Lamellenbremse 18 kann nun das Sonnenrad 16 gegenüber dem Gehäuse 11 des Getriebes 1 gebremst werden. Bei gleichzeitiger Verbindung des ungebremsten Hohlrades 10 mit dem Abtrieb 15 über die Klauenkupplung 14 kann aufgrund der Verbindung des Steges 12 mit dem Antriebsbereich 3 eine weitere Übersetzung ins Schnelle erzielt werden. Dieser weitere Gang der Übersetzung ins Schnelle, dessen Kraftfluss in Figur 6 dargestellt ist, wird typischerweise auch als Overdrive bezeichnet.

Mit einem derartigen Getriebe können nun alle herkömmlichen Vorwärtsgänge - ohne den Overdrive - identisch wie beim Getriebe gemäß dem Stand der Technik geschaltet werden, da zur Fortschaltung der einzelnen Gänge typischerweise nur eine Veränderung der Kopplungsstruktur von Elementen des Antriebsbereichs 3 und der Lamellenbremse 9 des Differentialwandlergetriebes 1 vonnöten ist. Die nachfolgenden Figur 3 und 4 sind zwei Vorwärtsgänge mit dem zugehörigen Kraftfluss exemplarisch dargestellt. Zur Vereinfachung der Darstellung wurde in den Figuren 3, 4 und 5 dabei auf die Darstellung der weiteren Lamellenbremse 18 verzichtet, welche hier stets offen gehalten ist. Erst in der Darstellung des Kraftflusses für den Overdrive selbst, wie er in Figur 6 dargestellt ist, ist die weitere Lamellenbremse 18 wieder eingezeichnet.

In Figur 3 ist der erste Gang dargestellt, bei welchem im Antriebsbereich 3 des Getriebes 1 das Moment entsprechend aufgeteilt wird, so dass ein Teil des Kraftflusses über den hydrodynamischen Wandler 2 in den Abtriebsbereich gelangt, während ein anderer Teil auf direktem mechanischem Wege in den Bereich des Steges 12 im Abtriebsbereich gelangt. Wenn dieser Steg 12 nun über die Kupplung 14 mit dem Abtrieb 15 gekoppelt ist, ist ein Fahren im ersten Gang möglich, wobei gleichzeitig das Hohlrad 10 des Planetensatzes 7 im Abtriebsbereich über die Lamellenbremse 9 am Gehäuse 11 des Differentialwandlergetriebes 1 festgehalten wird. In Figur 4 ist dann der vierte Gang dargestellt, bei welchem die Kopplungsstruktur der Planeten 4, 5 im Antriebsbereich 3 geändert ist und gleichzeitig über eine Lamellenbremse 17 die Turbine gebremst und damit der hydrodynamische Wandler deaktiviert ist. Auch in diesem Gang (wie auch im zweiten und dritten Gang) ist über eine entspreche Schaltung der Klauenkupplung 14 der Steg 12 des Planetensatzes 7 mit dem Abtrieb 15 verbunden.

In Figur 5 ist nun der Kraftfluss im Rückwärtsgang dargestellt. Dieser entspricht im Antriebsbereich 3 in der Kopplung der einzelnen Elemente wiederum dem ersten Gang. Durch ein Verbinden des Abtriebes mit dem Hohlrad 10 über die Kupplung 14, einem gleichzeitigen Freigeben des Hohlrades 10 über die Lamellenbremse 9 und einem Festhalten des Steges 12 über die Kupplung 13 kommt es nun jedoch zu einem Kraftfluss mit umgekehrter Drehrichtung am Abtrieb, so dass das Getriebe über den Wandler 2 im Rückwärtsgang läuft. Da ein Schalten vom Vorwärtsgang in den Rückwärtsgang typischerweise ohnehin lastlos erfolgt, stellt die Verwendung der einfachen, kleinen und robust arbeitenden Klauenkupplungen hier keinen wesentlichen Nachteil gegenüber der Verwendung von Lamellenkupplungen - welche hier auch denkbar wären - dar. Über die kleinen, robusten, kostengünstigen Klauenkupplungen kann vielmehr einfach und effizient eine Umkopplung in den Rückwärtsgang erreicht werden, ohne dass während des Betriebes - wie bei Lamellenkupplungen - ständige Reibungskräfte auftreten, welche den Wirkungsgrad des Getriebes verschlechtern.

Der einzige vermeintliche Nachteil bei dieser Art den Abtriebsbereich 6 des Getriebes 1 zu gestalten, besteht nun darin, dass keine Kopplungsstruktur mehr vorhanden ist, welche bei den niedrigen Abtriebsdrehzahlen des ersten und zweiten Ganges ein Bremsen mit dem Wandler 2 erlaubt. Aufgrund der Bauraumeinsparung und der Einsparung eines Planetensatzes im Abtriebsbereich 6 wird jedoch so viel an Komplexität verringert und an Bauraum eingespart, dass ein zusätzlicher separat vom Wandler 2 ausgebildeter Retarder oder eine andere geeignete Art von verschleißfreier Dauerbremse (nicht dargestellt) sehr leicht zum Einsatz kommen kann. Darüber hinaus bietet der Verzicht auf das Bremsen bei hohen Drehzahlen und der Einsatz eines separaten Retarders hierfür die Möglichkeit, den hydrodynamischen Wandler 2 ideal auf den Fahrbetrieb auszulegen, da hier kein Kompromiss zwischen Fahren und Bremsen mehr gemacht werden muss. Dadurch lassen sich weitere Vorteile erzielen.

Die separate verschleißfreie Dauerbremse kann dabei sowohl als primärer Retarder, welcher also mit der Drehzahl des Antriebsbereich läuft, als auch als sekundärer Retarder, welcher beispielsweise mit der Abtriebsdrehzahl läuft, ausgebildet sein. Es sind dabei grundsätzlich alle Arten von verschleißfreien Dauerbremsen denkbar, zum Beispiel eine Wirbelstrombremse, eine hydrostatische Bremse, ein Wasserretarder oder ein elektromotorischer Retarder, welcher beim Bremsen rekuperativ als Generator betrieben werden kann, um elektrische Energie in ein Bordnetz oder eine Energiespeichereinrichtung zurückzuspeisen. Abschließend soll angemerkt werden, dass diese Liste der möglichen Retarder, wobei aus Gründen der Belastung und der Drehzahlen sicherlich ein Sekundär-Retarder zu bevorzugen wäre, lediglich beispielhaft zu verstehen ist und keinen Anspruch auf Vollständigkeit hat.

Wegen des Wegfalls der Bremswirkung bei niedrigen Abtriebsdrehzahlen des ersten und zweiten Ganges ergibt sich ferner die Möglichkeit, den Planetensatz in seiner Auslegung sehr frei zu wählen. Auch dies birgt Vorteile hinsichtlich der Kraft und Leistungsflüsse im Getriebe. Ferner bewirkt das Abkoppeln des mechanischen Leistungsstrangs beim Rückwärtsfahren eine Eliminierung der Blindleistung, was sich ebenfalls positiv auf den Wirkungsgrad des Getriebes und die Bauteilbelastung auswirkt.

Dennoch kann der Wandler 2 weiterhin genutzt werden, um eine Bremswirkung bei den hohen Drehzahlen zum Beispiel des 3 oder 4. Ganges zu erreichen. Dazu wird ohne Veränderung der Kopplungsstruktur des Planetensatzes 7 lediglich das Hohlrad 10 über die Lamellenbremse 9 gegenüber dem Gehäuse 11 festgehalten. Dadurch kommt es zu einer Krafteinleitung in dem Bereich der Turbine des hydrodynamischen Wandlers 2, welche eine Bremswirkung analog einem Retarder hervorruft. Eine entsprechende gezielte Auslegung des Wandlers 2 für diese Bremsen ist jedoch nicht notwendig.

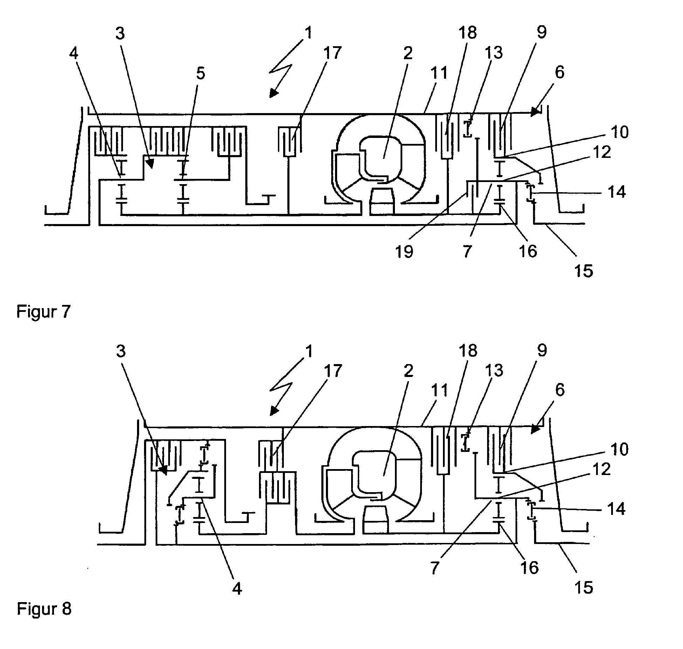

In Figur 6 ist, wie bereits erwähnt, der Kraftfluss im Overdrive dargestellt. Bei einem solchen Gang, welcher bei hohen Geschwindigkeiten zum Einsatz kommt, spielt das für Automatgetriebe typische Schalten unter Last keine entscheidende Rolle. Da seitens des Antriebsstranges und/oder des Fahrzeuges hohe Geschwindigkeiten und damit viel Schwung besteht, kann hier mit Klauenkupplungen lastfrei geschaltet werden, ohne dass dies als echter Nachteil zu werten wäre. Um das lastfreie Schalten jedoch weiter zu verbessern, können Synchronisierungsmittel 19 vorgesehen sein, welche entweder in die Klauenkupplung 14 direkt integriert sind oder wie in Figur 7 exemplarisch angedeutet, separat von der Klauenkupplung 14 an geeigneten Stellen im Getriebe 1 vorgesehen sind. Solche Synchronisierungsmittel erlauben ein kurzes Ansynchronisieren beim Schalten in den Overdrive, so dass dieser schnell und präzise geschaltet werden kann, auch wenn entgegen der ansonsten bei Automatgetrieben üblichen Art hier ein lastfreies Schalten mit der Klauenkupplung 14 zum Einsatz kommt.

Die Synchronisierung bei/für die Kupplung 14 kann auch besonders einfach aufgebaut werden oder sogar entfallen, wenn die Lamellenkupplung 18, erst nach oder während der Klauenschaltung, geschlossen wird. Die Drehzahlanpassung des Eingangsbereichs und des Motors wird dann durch die Lamellenkupplung 18 vorgenommen. Außerdem kann auch durch eine Regelung des Motors die Drehzahlanpassung der Klauenkupplung erreicht werden. Hierdurch lässt sich die mechanische Synchronisierung besonders einfach gestalten, oder kann sogar entfallen.

Eine weitere, sehr vorteilhafte Ausführungsform eines Differentialwandlergetriebes 1 ist in Figur 8 zu erkennen. Die Änderung gegenüber dem bisher beschriebenen Ausführungsformen liegt hier nämlich nicht im Bereich des Abtriebes 6, sondern im Bereich des Antriebes 3. Dieser Antriebsbereich 3 ist in einer sehr kompakten Art und Weise gestaltet, bei der die Kopplungsstruktur eines Planetensatzes 4 immer dann geändert wird, wenn dieser insgesamt lastfrei im Umlauf ist. Die in Figur 8 dargestellte Ausführungsvariante ist dabei nur eine von verschiedenen Möglichkeiten, welche insbesondere in der deutschen Patentanmeldung DE 2008100 10064 (& EP 2107275) näher beschrieben sind. Mit diesen beiden Möglichkeiten der genannten deutschen Anmeldung zur Optimierung des Antriebsbereiches 3 des Getriebes 1 und der hier dargelegten Variante zur Optimierung des Abtriebsbereiches 6 des Getriebes lassen sich dann extrem kompakte Differentialwandlergetriebe 1 bauen. Bei dem in Figur 8 dargestellten Ausführungsbeispiel kann bei vier Gängen aus dem Antriebsbereich 3 und einem zusätzlichen Overdrive aus dem Abtriebsbereich 6 ein extrem kompaktes Fünfganggetriebe mit insgesamt lediglich zwei Planetensätzen erreicht werden.

## Patentansprüche

1. Automatgetriebe mit einem Antriebsbereich, einem hydrodynamischen Wandler, und einem Abtriebsbereich, wobei sowohl Kraftwege über den hydrodynamischen Wandler, rein mechanische Kraftwege um den hydrodynamischen Wandler herum als auch kombinierte Kraftwege vorgesehen sind, wobei im Abtriebsbereich genau ein Planetensatz vorgesehen ist, **dadurch gekennzeichnet, dass** ein Bremsmittel (18) vorgesehen ist, welches zum Festhalten der Turbine des hydrodynamischen Wandlers (2) geeignet ist,
wobei ein Sonnenrad (16) des Planetensatzes (7) mit dem Wandler (2) verbunden ist, wobei Bremsmittel (9) zum Festhalten eines Hohlrades (10) vorgehen sind, und wobei Kupplungsmittel (14) zum Verbinden des Hohlrades (10) einerseits oder eines Steges (12) des Planetensatzes (7) andererseits mit den Abtrieb (15) vorgesehen sind.

2. Automatgetriebe nach einem der Ansprüche 1, **dadurch gekennzeichnet, dass** zum Festhalten des Steges (12) gegenüber einem Gehäuse (11) des Getriebes (1) Kupplungs- und/oder Bremsmittel (13) vorgesehen sind.

3. Automatgetriebe nach einem der Ansprüche 1 oder 2, **dadurch gekennzeichnet, dass** die Kupplungsmittel als Klauenkupplungen (13, 14) ausgebildet sind.

4. Automatgetriebe nach Anspruch 3, **dadurch gekennzeichnet, dass** für zumindest einen Teil der Klauenkupplungen (13) Synchronisierungsmittel (19) vorgesehen sind.

5. Automatgetriebe nach einem der Ansprüche 1 bis 4, **dadurch gekennzeichnet, dass** eine vom Wandler (2) separate verschließfreie Dauerbremse vorgesehen ist.

6. Automatgetriebe nach Anspruch 5, **dadurch gekennzeichnet, dass** die verschließfreie Dauerbremse als Sekundär-Retarder ausgebildet ist.

7. Verfahren zum Bremsen bei hohen Betriebsdrehzahlen mit einem Automatgetriebe nach einem der Ansprüche 1 bis 6, **dadurch gekennzeichnet, dass** zum Bremsen bei niedrigen Drehzahlen, das Hohlrad (10) des Planetensatzes (7) bei gleichzeitig mit dem Abtrieb verbundenen Steg (12) festgehalten wird.

## Claims

1. An automatic transmission, comprising a drive area, a hydrodynamic converter, and a driven area, with power paths being provided via the hydrodynamic converter, purely mechanical power paths around the hydrodynamic converter and combined power paths, with precisely one planetary gear set being provided in the driven area, **characterized in that** a braking means (18) is provided which is suitable for tightly holding the turbine of the hydrodynamic converter (2), with a sun gear (16) of the planetary gear set (7) being connected with the converter (2), with braking means (9) for tightly holding a ring gear (10) being provided, and with clutch means (14) being provided for connecting the ring gear (10) on the one hand or a planet carrier (12) of the planetary gear set (7) on the other hand with the power take-off (15).

2. An automatic transmission according to claim 1, **characterized in that** clutch and/or braking means (13) are provided for tightly holding the planet carrier (12) in relation to a housing (11) of the transmission (1).

3. An automatic transmission according to one of the claims 1 or 2, **characterized in that** the clutch means are arranged as claw clutches (13, 14).

4. An automatic transmission according to claim 3, **characterized in that** synchronization means (19) are provided for at least a part of the claw clutches (13).

5. An automatic transmission according to one of the claims 1 to 4, **characterized in that** a wear-free sustained-action brake is provided which is separate from the converter (2).

6. An automatic transmission according to claim 5, **characterized in that** the wear-free sustained-action brake is arranged as a secondary retarder.

7. A method for braking at high operating speeds with an automatic transmission according to one of the claims 1 to 6, **characterized in that** for braking at low speeds the ring gear (10) of the planetary gear set (7) is tightly held while the planet carrier (12) is simultaneously connected with the power take-off.

## Revendications

1. Transmission automatique disposant d'une zone d'entraînement, d'un convertisseur hydrodynamique et d'une zone de prise de force, dans laquelle des trajectoires de force passant par le convertisseur hydrodynamique, des trajectoires de force purement mécaniques contournant le convertisseur hydrodynamique de même que des trajectoires de force combinées sont prévues, dans laquelle un engrenage planétaire est prévu exactement dans la zone de prise de force, **caractérisée en ce qu'**un moyen de freinage (18) est prévu, convenant au blocage de la turbine du convertisseur hydrodynamique (2),
une roue solaire (16) de l'engrenage planétaire (7) étant reliée au convertisseur (2), des moyens de freinage (9) permettant de bloquer une roue creuse (10) étant prévus, et des moyens d'embrayage (14) étant prévus pour relier la roue creuse (10) d'une part ou une entretoise (12) de l'engrenage planétaire (7) d'autre part à la prise de force (15).

2. Transmission automatique selon la revendication 1, **caractérisée en ce que** des moyens d'embrayage et/ou de freinage (13) sont prévus pour bloquer l'entretoise (12) par rapport à un carter (11) de la transmission (1).

3. Transmission automatique selon l'une des revendications 1 ou 2, **caractérisée en ce que** les moyens d'embrayage sont conçus comme des embrayages à griffes (13, 14).

4. Transmission automatique selon la revendication 3, **caractérisée en ce que** des moyens de synchronisation (19) sont prévus pour au moins une partie des embrayages à griffes (13).

5. Transmission automatique selon l'une des revendications 1 à 4, **caractérisée en ce qu'**un frein permanent sans usure séparé du convertisseur (2) est prévu.

6. Transmission automatique selon la revendication 5, **caractérisée en ce que** le frein permanent sans usure est conçu comme retardeur secondaire.

7. Procédé de freinage à des vitesses d'exploitation élevées pourvu d'une transmission automatique selon l'une quelconque des revendications 1 à 6, **caractérisé en ce que** pour freiner à de faibles vitesses, l'on bloque la roue creuse (10) de l'engrenage planétaire (7) en même temps que l'entretoise (12) reliée à la prise de force.
